# EUROPÄISCHE PATENTSCHRIFT

(11) **EP 0 672 559 B1**
(45) Veröffentlichungstag und Bekanntmachung des Hinweises auf die Patenterteilung: **09.04.1997**
(21) Anmeldenummer: 94118076.2
(22) Anmeldetag: 16.11.1994
(51) Int. Cl.: B60R 21/20, F16B 5/10

(54) **Verschlusseinrichtung zum lösbaren Verbinden zweier Bauteile**
Connecting device for releasably assembling two elements
Organe de verrouillage pour assembler de façon démontable deux éléments

(30) Priorität: 21.02.1994 DE 9402752 U
(43) Veröffentlichungstag der Anmeldung: 20.09.1995
(73) Patentinhaber: CAMLOC GmbH, D-65779 Kelkheim (DE)
(72) Erfinder: Stölken, Jochen, D-65719 Hofheim (DE); Hübsch, Christian, D-65779 Kelkheim (DE)
(74) Vertreter: KEIL & SCHAAFHAUSEN Patentanwälte

(56) Entgegenhaltungen:
- US-A- 2 797 464
- US-A- 4 442 571
- US-A- 4 785 144

## Beschreibung

Die Erfindung bezieht sich auf eine Verschlußeinrichtung zum lösbaren Verbinden zweier Bauteile, insbesondere für die Befestigung eines Airbag an einem Lenkradflansch eines Kraftfahrzeugs, mit einem Verbindungszapfen mit einem in zueinander ausgerichtete Öffnungen der Bauteile einsetzbaren Zapfenschaft, mit einem für die Abstützung an dem zweiten Bauteil vorgesehenen Kopfteil und mit einem auf dem Zapfenschaft aufgenommenen Halteelement für die Verriegelung mit dem ersten Bauteil. Diese Merkmale sind aus der US-A-4 442 571 bekannt.

Aufgabe der Erfindung ist es, eine solche Verschlußeinrichtung so auszugestalten, daß bei einfachem Aufbau und zuverlässiger Funktionsweise ein schnelles und sicheres Befestigen des einen Bauteils an dem anderen möglich ist, dennoch die erforderlichen Zug- und Druckkräfte ausgehalten werden und daß es bei Bedarf auch wieder einfach demontiert werden kann. Eine solche Aufgabe stellt sich insbesondere im Zusammenhang mit der Befestigung eines Airbag im Lenkrad eines Kraftfahrzeugs, welcher bisher in aufwendiger Weise durch Schraubverbindungen montiert wurde.

Diese Aufgabe wird bei einer Verschlußeinrichtung der eingangs genannten Art erfindungsgemäß im wesentlichen bspw. dadurch gelöst, daß das Halteelement als auf dem Zapfenschaft gegen die Wirkung einer Rückstellfeder drehbare, Radialschlitze aufweisende Drehriegelscheibe ausgebildet ist, daß in der Öffnung des ersten Bauteils ein Verriegelungsring vorzugsweise mit schräge Auflaufflächen aufweisenden, den Radialschlitzen der Drehriegelscheibe entsprechenden Radialarmen festgelegt ist, daß beim axialen Hindurchführen der Drehriegelscheibe durch die Öffnung des ersten Bauteils aufgrund des Zusammenwirkens mit dem feststehenden Verriegelungsring die Drehriegelscheibe gegen die Wirkung der Rückstellfeder aus ihrer Ausgangslage soweit auf dem Zapfenschaft verdreht wird, bis die Radialarme des Verriegelungsrings durch die Radialschlitze der Drehriegelscheibe hindurchtreten können, und daß bei weiterem axialen Hindurchführen der Drehriegelscheibe durch den Verriegelungsring die Drehriegelscheibe unter der Wirkung der Rückstellfeder die Radialarme des Verriegelungsrings hintergreifend in Richtung seiner Ausgangsdrehlage zurückschnappt.

Eine so ausgestaltete Verschlußeinrichtung stellt eine formschlüssige Verbindung zwischen dem ersten und dem zweiten Bauteil her. Dazu ist nur eine geradlinige Fügebewegung beim Einsetzen der an dem zweiten Bauteil vormontierten Verschlußeinrichtung in das erste Bauteil erforderlich.

In weiterer Ausgestaltung der Erfindung kann die Drehriegelscheibe auf eine dem Verriegelungsring beim Einführen zugekehrten Fläche, vorzugsweise axial schräg verlaufende Einführungsrippen aufweisen, um ein störungsfreies Zusammenwirken von Drehriegelscheibe und Verriegelungsring beim Zusammenfügen sicherzustellen.

Gemäß einem weiteren Erfindungsmerkmal hat die Drehriegelscheibe auf einer nach dem Einführen den Enden der Radialarme des Verriegelungsrings zugekehrten Fläche Auflauframpen. Diese sind so angeordnet und ausgestaltet, daß beim Zurückschnappen der Drehriegelscheibe nach dem Durchtreten durch den Verriegelungsring die Enden der schräg gestellten Radialarme je nach den gegebenen Toleranzen mehr oder weniger weit auf die Auflauframpe auflaufen. Auf diese Weise ist ein Toleranzausgleich möglich, welcher die Vibrationssicherheit weiter verbessert.

Für die Fertigung und die Funktion der Verschlußeinrichtung ist es von Vorteil, wenn der Verriegelungsring als Blatt federring mit radialen Blattfederarmen ausgebildet ist.

Gemäß einer weiterer Ausgestaltung der Erfindung ist vorgesehen, daß die Rückstellfeder als mit einem Formfederteil drehfest auf dem Zapfenschaft sitzenden und mit einem Schenkel an der Drehriegelscheibe angreifenden Schraubenfeder ausgebildet ist. Eine solche Rückstellfeder läßt sich einfach und sicher montieren. Dabei kann die Rückstellfeder z. B. in einem Abschnitt mit einem radial nach außen ragenden Schenkel an der Drehriegelscheibe festgeklemmt sein oder mit einem axparallel abgewinkelten Schenkel in eine entsprechende Bohrung der Drehriegelscheibe eingreifen.

Um die Demontage zu erleichtern kann die Drehriegelscheibe mit für den Angriff eines Drehwerkzeugs geeigneten Verstärkungsrippen ausgestattet sein. Mit einem solchen Werkzeug läßt sich auf einfache Weise die Drehriegelscheibe - gegen die Wirkung der Rückstellfeder - aus der Verriegelungsdrehstellung wieder in eine Stellung zurückdrehen, in welcher die Radialarme des Verriegelungsringes axial durch die Schlitze der Drehriegelscheibe hindurchgeführt werden können.

Zweckmäßigerweise hat der Kopfteil ein Flanschelement, welches durch eine Umbördelung mit dem zweiten Bauteil verankerbar ist. Auf diese Weise ist eine Teilvormontage der Verschlußeinrichtung möglich. Der andere Teil der Verschlußeinrichtung besteht in dem Verriegelungsring, welcher bspw. in eine Öffnung des ersten Bauteils, insbesondere eines Lenkradflanschs, wenn es um die Montage eines Airbag geht, zur Vormontage eingepreßt werden kann.

Weitere Ziele, Merkmale und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung auch unabhängig von ihrer Zusammenfassung in den Ansprüchen oder deren Rückbeziehung.

Es zeigen:
- Fig. 1: schematisch, teilweise geschnitten und weggebrochen, eine die Erfindung aufweisende Verschlußeinrichtung,
- Fig. 2: eine Seitenansicht einer Drehriegelscheibe der Verschlußeinrichtung nach Fig. 1 vor der Montage an dem Verbindungszapfen,
- Fig. 3: in Unteransicht die Drehriegelscheibe und den Verriegelungsring nach Fig. 1 in ihrer relativen Verriegelungsdrehstellung sowie durch Pfeile angedeutet die Drehrichtung der Drehriegelscheibe relativ zu dem Verriegelungsring beim hindurchführen der Drehriegelscheibe durch den Verriegelungsring (linker Pfeil; Auslenkbewegung) und nach dem Hindurchtreten der Radialarme des Verriegelungsring durch die Schlitze der Drehriegelscheibe (rechter Pfeil; Rückstellbewegung),

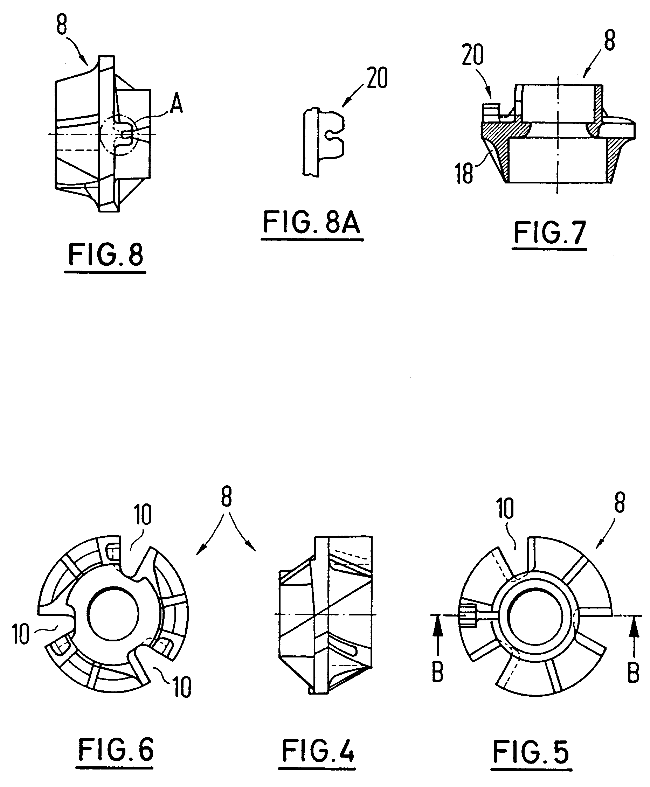

- Fig. 4 bis 7: in Seitenansicht, Unteransicht, Draufsicht und entsprechend Schnittlinie B-B von Fig. 5 geschnitten eine bei der Erfindung vorzugsweise eingesetzte Drehriegelscheibe,
- Fig. 8: eine Seitenansicht der Drehriegelscheibe nach Fig. 4 aus anderer Richtung gesehen, und
- Fig. 8A: eine Klemmeinrichtung für den Schenkel einer Rückstellfeder vergrößert gemäß Detail A von Fig. 8.

Die dargestellte Verschlußeinrichtung ist zum lösbaren Verbinden zweier Bauteile 1 und 2 bestimmt. Das Bauteil 1 kann bspw. ein Lenkradflansch 1' und das Bauteil 2 ein wannenförmiges Gehäuse eines Airbag 2' sein. Die Verschlußeinrichtung weist einen Verbindungszapfen 3 auf, welcher mit seinem Zapfenschaft 6 durch zueinander ausgerichtete Öffnungen 4 und 5 der Bauteile 1 bzw. 2 hindurchführbar ist. Der Verbindungszapfen 3 stützt sich nach der entsprechenden Vormontage mit einem Kopfteil 7 außen an dem Bauteil 2 ab. Der Kopfteil 7 weist bei der dargestellten Ausführung ein über eine Nietverbindung an dem einen Ende des Zapfenschafts 6 befestigtes Flanschelement 19 auf, welches über eine Umbördelung 21 mit dem Bauteil 2 in der Öffnung 4 verankert ist.

Das Kopfteil 7 kann aber auch einstückig mit dem Zapfenschaft 6 ausgebildet sein und einen Durchmesser haben, welcher größer als der Durchmesser der Öffnung 5 in dem zweiten Bauteil 2 ist.

Der Zapfenschaft 6 trägt ein Halteelement 8 für die Verriegelung mit dem ersten Bauteil 1. Das Halteelement 8 ist gegen die Wirkung einer Rückstellfeder 9 drehbar auf dem Zapfenschaft 6 gelagert. Die Rückstellfeder 9 ist als Schraubenfeder 9' ausgebildet und sitzt mit einem Formfederteil 16 drehfest auf dem Zapfenschaft 6, während von einem Schenkelfederteil 22 ein radial abstehender Schenkel 17 in einer Festklemmeinrichtung 20 des Halteelements 8 aufgenommen ist. Statt des radial abstehenden Schenkels 17 kann z. B. auch ein in Axialrichtung abgewinkelter Schenkel vorgesehen sein, welcher zur Mitnahme in eine entsprechende Axialbohrung des Halteelements 8, 8' eingreift. Das Kalteelement 8 ist als mit über den Umfang verteilten Radialschlitzen 10 versehene Drehriegelscheibe 8' ausgebildet. So bilden das Bauteil 2, der Verbindungszapfen 3, die Drehriegelscheibe 8' und die Schraubenfeder 9' eine vormontierte bauliche Einheit. Die Schraubenfeder 9' stützt sich dabei mit einem Distanzfederteil 23 auf der Innenseite des des zweiten Bauteil 2 über das an diesem festliegenden Flanschelement 19 ab, um Abstand zwischen zweitem Bauteil 2 und Halteelement 8 zu halten.

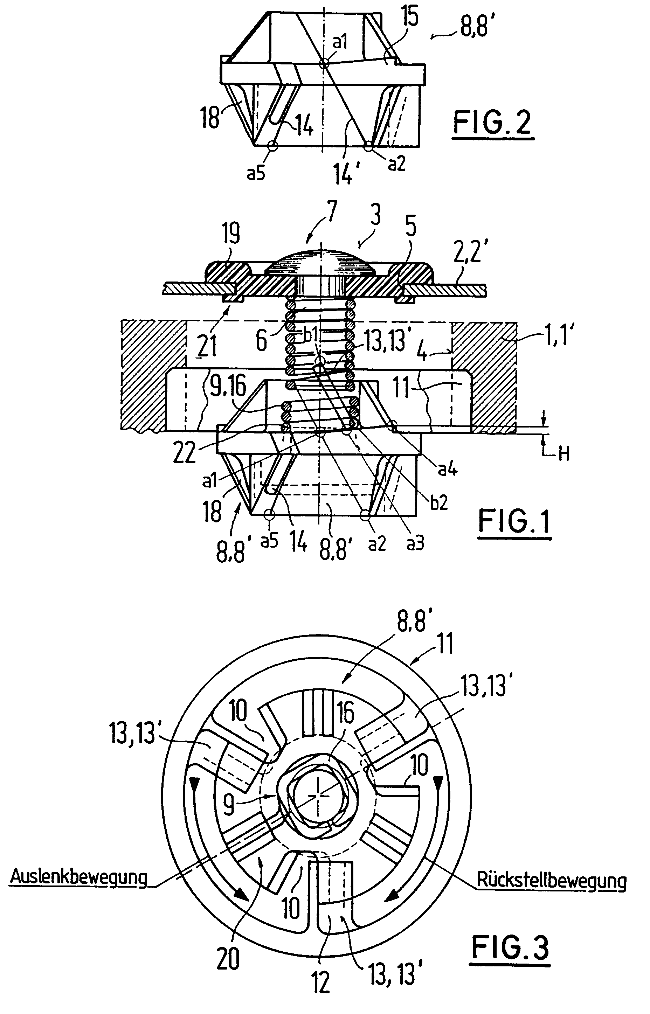

In eine Aussparung der Öffnung 5 des ersten Bauteils 1 ist ein als Blattfederring 11' ausgebildeter Verriegelungsring 11 eingepreßt, welcher nach Anzahl und winkelsymetrischer Umfangsanordnung den Radialschlitzen 10 der Drehriegelscheibe 8' entsprechende von dem Umfangsrand nach innen weisende als Blattfederarme 13' ausgebildete Radialarme 13 aufweist. Diese Radialarme 13 sind, wie aus Fig. 1 ersichtlich, in Umfangsrichtung geneigt und bilden so eine schräge Auflauffläche 12 für zur Axialrichtung schräg gestellte Einführungsrippen 14, 14' auf der zugeordneten Fläche der Drehriegelscheibe 8'. Zwischen zwei Einführrippen 14, 14' kann die Winkelstellung der Blattfederarme 13' beim Schließen des Verschlusses liefern.

Beim axialen Hindurchführen der Drehriegelscheibe 8' durch die Öffnung 4 des ersten Bauteils 1 wird somit aufgrund des Zusammenwirkens mit dem feststehenden Verriegelungsring 11 die Drehriegelscheibe 8' gegen die Wirkung der Rückstellfeder 9 auf dem Zapfenschaft 6 so weit verdreht, bis die Radialarme 13 des Verriegelungsrings 11 durch die Radialschlitze 10 der Drehriegelscheibe 8' hindurchtreten können. Beim weiteren axialen Hindurchführen der Drehriegelscheibe 8' durch den Verriegelungsring 11 schnappt die Drehriegelscheibe 8' unter der Wirkung der Rückstellfeder 9, die Radialarme 13 des Verriegelungsrings 11 hintergreifend, in Richtung seiner Ausgangsdrehlage zurück. Dabei weist die Drehriegelscheibe 8', wie aus Fig. 1 ersichtlich, auf einer nach dem Einführen der Drehriegelscheibe 8' in den Verriegelungsring 11 den in der Zeichnung unteren Enden der Radialarme 13 des Verriegelungsrings 11 zugekehrten Fläche Auflauframpen 15 auf, so daß die Rückstellbewegung der Drehriegelscheibe 8' immer nur so weit geht, bis die inneren freien Enden der Radialarme 13 mit der Oberfläche der Auflauframpe 15 zur Anlage kommen. Auf diese Weise können unterschiedliche Toleranzen bis zur Rampenhöhe H ausgeglichen werden.

Beim Schließvorgang berührt also zunächst bei Fügebeginn die auf dem Verbindungszapfen 3 drehbar gelagerte Drehriegelscheibe 8' die dargestellten drei Blattfederarme 13' des im ersten Bauteil 1 eingepreßten Blattfederringes 11' auf deren Oberseite bei b1. Im Idealfall liegt in diesem Augenblick die Oberkante b1 des Blattfederarms 13' zwischen den Punkten a1 und a2 der Drehriegelscheibe 8'. Bei Fortschreiten der Fügebewegung verdreht sich die Drehriegelscheibe 13' gegen die Kraft der Schraubenfeder 9' so lange, bis die Blattfederarme 13' die Radialschlitze 10 in der Drehriegelscheibe 8' passiert haben. Sobald die Vorderkante a1 der Radialschlitze 10 an den Unterkanten b2 der Blattfederarme 3' vorbeigleiten, beginnt die Schenkelfeder 9' mit der Rückstellbewegung. Diese kommt zum Stillstand, wenn sich Drehriegelscheibe 8' und Blattfederarme 13' im Punkt a3 berühren.

Ein dem Kundendienst zur Verfügung stehendes rohrförmiges geschlitztes Spezialwerkzeug wird zum Öffnen der erfindungsgemäßen Verschlußeinrichtung von unten auf diese aufgeschoben. Das Drehwerkzeug kommt mit Versteifungsrippen 18 der Drehriegelscheibe 8' als Mitnehmer zum Eingriff, so daß die Drehriegelscheibe 8' in eine Position verdreht werden kann, in welcher die Radialarme 13 des Verriegelungsrings 11 wieder axial durch die Radialschlitze 10 der Drehriegelscheibe 8' hindurchtreten können, so daß eine schnelle Demontage des Bauteils 2 von dem Bauteil 1 möglich ist.

Bei der erfindungsgemäßen Verschlußeinrichtung ist ein Toleranzausgleich vorgesehen, weil die Lage des Punktes a3 zwischen Rampenbeginn a1 und Rampenende a4 abhängig von den axialen Toleranzen aller beteiligten Bauteile ist. Winkeltoleranzen (Position Drehriegelscheibe - Blattfederring) können ebenfalls in einem weiten Bereich ausgeglichen werden. Es muß lediglich sichergestellt seien, daß die Oberkante b1 der Blattfederarme 13' zwischen den Punkten a5 (Unterkante der Einführrampe) und a2 liegt.

Die Anzahl der Radialarme 3 und somit auch der Radialschlitze 10 kann mit steigender Verschlußgröße erhöht werden.

### Bezugszeichenliste:

- 1: erstens Bauteil
- 1': Lenksäulenflansch
- 2: zweites Bauteil
- 2': Airbag
- 3: Verbindungszapfen
- 4: Öffnung
- 5: Öffnung
- 6: Zapfenschaft
- 7: Kopfteil
- 8: Halteelement
- 8': Drehriegelscheibe
- 9: Rückstellfeder
- 9': Schraubenfeder
- 10: Radialschlitze
- 11: Verriegelungsring
- 12: Auflaufflächen
- 13: Radialarme
- 13': Blattfederarme
- 14: Einführungsrippen
- 15: Auflauframpe
- 16: Formfederteil
- 17: Schenkel
- 18: Verstärkungsrippen
- 19: Flanschelement
- 20: Festklemmeinrichtung
- 21: Umbördelung
- 22: Schenkelfederteil
- 23: Distanzfederteil

## Patentansprüche

1. Verschlußeinrichtung zum lösbaren Verbinden zweier Bauteile (1, 2), insbesondere für die Befestigung eines Airbag (2') an einem Lenkradflansch (1') eines Kraftfahrzeugs, mit einem Verbindungszapfen (3) mit einem in zueinander ausgerichtete Öffnungen (4, 5) der Bauteile (1, 2) einsetzbaren Zapfenschaft (6), mit einem für die Abstützung an dem zweiten Bauteil (2) vorgesehenen Kopfteil (7) und mit einem auf dem Zapfenschaft (6) aufgenommenen Halteelement (8) für die Verriegelung mit dem ersten Bauteil (1), **dadurch gekennzeichnet**, daß das Haltelement (8) als auf dem Zapfenschaft (6) gegen die Wirkung einer Rückstellfeder (9) drehbare, Radialschlitze (10) aufweisende Drehriegelscheibe (8') ausgebildet ist, daß in der Öffnung (4) des ersten Bauteils (1) ein Verriegelungsring (11) mit vorzugsweise schräge Auflaufflächen (12) aufweisenden, den Radialschlitzen (10) der Drehriegelscheibe (8') entsprechenden Radialarmen (13) festlegbar ist, daß beim axialen Hindurchführen der Drehriegelscheibe (8') durch die Öffnung (4) des ersten Bauteils (1) aufgrund des Zusammenwirkens mit dem feststehenden Verriegelungsring (11) die Drehriegelscheibe (8') gegen die Wirkung der Rückstellfeder (9) aus ihrer Ausgangslage so weit auf dem Zapfenschaft (6) verdreht wird, bis die Radialarme (13) des Verriegelungsringes (11) durch die Radialschlitze (10) der Drehriegelscheibe (8') hindurchtreten, und daß bei weiterem axialen Hindurchführen der Drehriegelscheibe (8') durch den Verriegelungsring (11) die Drehriegelscheibe (8') unter der Wirkung der Rückstellfeder (9) die Radialarme (13) des Verriegelungsrings (11) hintergreifend in Richtung seiner Ausgangsdrehlage zurückschnappt.

2. Verschlußeinrichtung nach Anspruch 1, **dadurch gekennzeichnet**, daß die Drehriegelscheibe (8') auf einer dem Verrieglungsring (11) beim Einführen zugekehrten Fläche, vorzugsweise axial schräg verlaufende Einführungsrippen (14) aufweist.

3. Verschlußeinrichtung nach Anspruch 1 oder 2, **dadurch gekennzeichnet**, daß die Drehriegelscheibe (8') auf einer nach dem Einführen in den Verriegelungsring (11) den Enden der Radialarme (13) des Verriegelungsrings (11) zugekehrten Fläche Auflauframpen (15) aufweist.

4. Verschlußeinrichtung nach einem der Ansprüche 1 bis 3, **dadurch gekennzeichnet**, daß der Verriegelungsring (11) als Blattfedering (11') mit radialen Blattfederarmen (13') ausgebildet ist.

5. Verschlußeinrichtung nach einem der Ansprüche 1 bis 4, **dadurch gekennzeichnet**, daß die Rückstellfeder (9) als mit einem Formfederteil (16) drehfest auf dem Zapfenschaft (6) sitzenden und mit einem Schenkel (17) an der Drehriegelscheibe (8') angreifenden Schraubenfeder (9') ausgebildet ist.

6. Verschlußeinrichtung nach einem der Ansprüche 1 bis 5, **dadurch gekennzeichnet**, daß die Drehriegelscheibe (8') mit für den Angriff eines Drehwerkzeugs geeigneten Verstärkungsrippen (18) ausgestattet ist.

7. Verschlußeinrichtung nach einem der Ansprüche 1 bis 6, **dadurch gekennzeichnet**, daß der Kopfteil (7) des Verbindungszapfens (3) ein Flanschelement (19) aufweist, welches durch eine Umbördelung (21) mit dem zweiten Bauteil (2) verankerbar ist.

## Claims

1. Locking device for releasable connection of two components (1, 2), in particular for fixing an airbag (2') to a steering wheel flange (1') of a motor vehicle, with a connecting pin (3) with a pin shaft (6) which can be inserted in openings (4, 5) aligned to each other of the components (1, 2), with a head part (7) provided on the second component (2) as support and with a holding element (8) arranged on the pin shaft (6) for interlocking with the first component (1), characterized in that the holding element (8) is formed as a rotary lock disk (8') which has radial slots (10) and can rotate on the pin shaft (6) against the action of a return spring (9), that in the opening (4) of the first component (1) can be fixed a locking ring (11) with radial arms (13) which preferably have inclined run-up surfaces (12) and correspond to the radial slots (10) of the rotary lock disk (8'), that on axial displacement of the rotary lock disc (8') through the opening (4) of the first component (1), due to the cooperation with the fixed locking ring (11), the rotary lock disc (8') is turned on the pin shaft (6) against the action of the return spring (9) out of its starting position sufficiently far until the radial arms (13) of the locking ring (11) project through the radial slots (10) of the rotary lock disc (8') and that on further axial displacement of the rotary lock disc (8') through the locking ring (11), under the action of the return spring (9) the rotary locking disc (8') snaps back in the direction of its starting rotation position, the radial arms (13) of the locking ring (11) engaging behind.

2. Locking device according to claim 1, characterized in that the rotary lock disc (8') has, on one of the surfaces facing the locking ring (11) on insertion, preferably axial oblique guidance ribs (14).

3. Locking device according to claim 1 or 2, characterized in that the rotary lock disc (8') has, on one surface facing the ends of the radial arms (13) of the locking ring (11) after insertion into the locking ring (11), run-up ramps (15).

4. Locking device according to any of claims 1 to 3, characterized in that the locking ring (11) is formed as a leaf spring (11') with radial leaf spring arms (13').

5. Locking device according to any of claims 1 to 4, characterized in that the return spring (9) is formed as a coil spring (9') sitting twist-resistant on the pin shaft (6) with one formed spring part (16) and engaging with one leg (17) in the rotary lock disc (8').

6. Locking device according to any of claims 1 to 5, characterized in that the rotary lock disc (8') is fitted with appropriate reinforcement ribs (18) for engagement of a turning tool.

7. Locking device according to any of claims 1 to 6, characterized in that the head part (7) of the connecting pin (3) has a flange element (19) which can be anchored to the second component (2) by means of a beaded edge (21).

## Revendications

1. Dispositif de verrouillage pour relier de façon détachable deux composants (1, 2), en particulier pour fixer un airbag (2') sur un flasque de volant (1') d'un véhicule automobile, comportant un tenon de liaison (3) présentant une tige de tenon (6) susceptible d'être mise en place dans des ouvertures (4, 5) orientées l'une à l'autre des composants (1, 2), comportant une partie de tête (7) prévue pour l'appui contre le second composant (2), et un élément de retenue (8) reçu sur la tige de tenon (6) pour le verrouillage avec le premier composant (1), caractérisé en ce que l'élément de retenue (8) est réalisé sous forme d'un disque de verrouillage (8') en rotation sur la tige de tenon (6) à l'encontre de l'effet d'un ressort de rappel (9) et présentant des fentes radiales (10), en ce qu'un anneau de verrouillage (11), qui présente des bras radiaux (13) pourvus de surfaces de montée préférablement inclinées (12) et correspondant aux fentes radiales (10) du disque de verrouillage rotatif (8'), peut être fixé dans l'ouverture (4) du premier composant (1), en ce que lors du passage axial du disque de verrouillage rotatif (8') à travers l'ouverture (4) du premier composant (1), et en raison de la coopération avec l'anneau de verrouillage fixe (11), le disque de verrouillage rotatif (8') est tourné sur la tige de tenon (6) à l'encontre de l'effet du ressort de rappel (9) depuis sa position de départ, aussi loin que les bras radiaux (13) de l'anneau de verrouillage (11) traversent les fentes radiales (10) du disque de verrouillage rotatif (8'), et en ce que lors d'une poursuite du passage axial du disque de verrouillage rotatif (8') à travers l'anneau de verrouillage (11), le disque de verrouillage rotatif (8') s'enclenche en retour en direction de sa position de rotation de départ sous l'effet du ressort de rappel (9), en engageant les bras radiaux (13) de l'anneau de verrouillage (11) par l'arrière.

2. Dispositif de verrouillage selon la revendication 1, caractérisé en ce que le disque de verrouillage rotatif (8') présente, sur une surface orientée vers l'anneau de verrouillage (11) lors de l'introduction, des nervures d'introduction (14) qui s'étendent de préférence axialement en oblique.

3. Dispositif de verrouillage selon l'une ou l'autre des revendications 1 et 2, caractérisé en ce que le disque de verrouillage rotatif (8') présente des rampes de montée (15) sur une surface orientée vers les extrémités des bras radiaux (13) de l'anneau de verrouillage (11), après l'introduction dans l'anneau de verrouillage (11).

4. Dispositif de verrouillage selon l'une quelconque des revendications 1 à 3, caractérisé en ce que l'anneau de verrouillage (11) est réalisé sous forme d'un anneau plat élastique (11') présentant des bras radiaux en ressort à lame (13').

5. Dispositif de verrouillage selon l'une quelconque des revendications 1 à 4, caractérisé en ce que le ressort de rappel (9) est réalisé sous forme d'un ressort hélicoïdal (9'), qui est logé solidairement en rotation avec un élément élastique en forme (16) sur la tige de tenon (6), et qui attaque par une aile (17) le disque de verrouillage rotatif (8').

6. Dispositif de verrouillage selon l'une quelconque des revendications 1 à 5, caractérisé en ce que le disque de verrouillage rotatif (8') est équipé de nervures de renforcement (18) appropriées pour l'attaque par un outil rotatif.

7. Dispositif de verrouillage selon l'une quelconque des revendications 1 à 6, caractérisé en ce que la partie de tête (7) du tenon de liaison (3) présente un élément de bride (19) qui peut être ancré avec le second composant (2) par rabattage (21).
